# EUROPÄISCHE PATENTSCHRIFT

(11) **EP 2 827 398 B1**
(45) Veröffentlichungstag und Bekanntmachung des Hinweises auf die Patenterteilung: **24.02.2016**
(21) Anmeldenummer: 13176777.4
(22) Anmeldetag: 17.07.2013
(51) Int. Cl.: H01M 2/02, H01M 4/86, H01M 12/06, H01M 12/08, H01M 4/24

(54) **Metall-Luft-Knopfzellen und Verfahren zu ihrer Herstellung**
Metal-air button cells and method for their preparation
Piles boutons métal-air et leur procédé de fabrication

(43) Veröffentlichungstag der Anmeldung: 21.01.2015
(73) Patentinhaber: VARTA Microbattery GmbH, 73479 Ellwangen (DE)
(72) Erfinder: Csrenko, Cornelia, 73433 Aalen (DE); Löffelmann, Hermann, 73479 Ellwangen (DE); Haake, Thomas, 73479 Ellwangen (DE); Brenner, Alexander, 73479 Ellwangen (DE)
(74) Vertreter: Patentanwaltskanzlei Cartagena

(56) Entgegenhaltungen:
- EP-A1- 0 289 704
- DE-A1- 2 535 269

## Beschreibung

Die im Folgenden beschriebene Erfindung betrifft Metall-Luft-Knopfzellen und ein Verfahren zu ihrer Herstellung.

Metall-Luft-Zellen enthalten als elektrochemische Aktivkomponenten üblicherweise eine metallbasierte Anode und eine Luftkathode, die durch einen ionenleitfähigen Elektrolyten voneinander getrennt sind. Bei der Entladung wird an der Luftkathode Sauerstoff unter Elektronenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es existieren sowohl primäre als auch sekundäre Metall-Luft-Zellen. Eine sekundäre Metall-Luft-Zelle wird wieder aufgeladen, indem zwischen Anode und Kathode eine Spannung angelegt und die beschriebene elektrochemische Reaktion umgekehrt wird. Dabei wird Sauerstoff freigesetzt.

Das bekannteste Beispiel einer Metall-Luft-Zelle ist die Zink-Luft-Zelle. In Knopfzellenform findet diese insbesondere als Batterie für Hörgeräte Verwendung.

Metall-Luft-Zellen weisen eine sehr hohe Energiedichte auf, weil der Bedarf an Sauerstoff an der Kathode durch Luftsauerstoff aus der Umgebung gedeckt werden kann. Entsprechend muss der Kathode beim Entladevorgang Luftsauerstoff zugeführt werden. Umgekehrt muss beim Ladevorgang einer Metall-Luft-Zelle an der Luftkathode entstehender Sauerstoff abgeführt werden. Aus diesen Gründen weisen Metall-Luft-Zellen in der Regel Gehäuse auf, die mit entsprechenden Eintritts- bzw. Austrittsöffnungen versehen sind. In der Regel werden als Eintritts- bzw. Austrittsöffnungen Löcher in die Gehäuse eingestanzt.

Als Luftkathode kommen in Metall-Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Sehr häufig kommen in Metall-Luft-Zellen als Luftkathoden kunststoffgebundene Gasdiffusionselektroden zum Einsatz. Solche Gasdiffusionselektroden sind beispielsweise in der DE 37 22 019 A1 beschrieben. In solchen Elektroden bildet ein Kunststoffbinder (z.B. Polytetrafluorethylen, kurz PTFE) eine poröse Matrix aus, in die Partikel aus einem elektrokatalytisch aktiven Material (zum Beispiel aus einem Edelmetall wie Platin oder Palladium oder aus einem Manganoxid) eingebettet sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, zum Beispiel ein Netz aus Silber, Nickel oder versilbertem Nickel, eingewalzt werden. Das Metallnetz bildet eine Ableiterstruktur innerhalb der Elektrode und dient als Stromableiter.

Die erwähnten Eintritts- bzw. Austrittsöffnungen für Sauerstoff sind in aller Regel in den Boden des Gehäuses einer Metall-Luft-Zelle eingebracht, insbesondere wenn es sich hierbei um eine Knopfzelle handelt. Damit durch die Öffnungen eintretender Sauerstoff möglichst unmittelbar in Kontakt mit der Luftkathode treten kann, ist die Luftkathode in solchen Zellen üblicherweise flach auf dem Gehäuseboden positioniert, so dass sie die Öffnungen abdeckt. Gegebenenfalls kann es vorteilhaft sein, zwischen der Luftkathode und dem Gehäuseboden einen Luftverteiler vorzusehen, beispielsweise ein poröses Filterpapier. Dies ist aber nicht in allen Fällen erforderlich.

Wird nun in einer derart positionierten Luftkathode Sauerstoff reduziert, so werden die dabei freigesetzten Elektronen in der Regel über die erwähnte Ableiterstruktur abgeführt. Diese steht üblicherweise in unmittelbarem elektrischen Kontakt zu einem Teil des Gehäuses, das als Pol dienen kann.

Bei Messungen hat sich herausgestellt, dass Metall-Luft-Zellen mit dem geschilderten Aufbau oftmals starke Streuungen aufweisen, was ihre elektrochemischen Eigenschaften angeht. So weisen einzelne Zellen regelmäßig deutlich höhere Impedanzwerte auf als dies im Mittel zu erwarten gewesen wäre.

Der vorliegenden Erfindung lag die Aufgabe zugrunde, eine Lösung für das genannte Problem aufzufinden.

Eine derartige Lösung stellen die Metall-Luft-Zelle mit den Merkmalen des Anspruchs 1 sowie das Verfahren zur Herstellung einer Metall-Luft-Knopfzelle mit den Merkmalen des Anspruchs 8 dar. Bevorzugte Ausführungsformen der erfindungsgemäßen Zelle sind in den abhängigen Ansprüchen 2 bis 7 definiert. Im abhängigen Anspruch 9 ist eine bevorzugte Ausführungsform des erfindungsgemäßen Verfahrens angegeben. Der Wortlaut sämtlicher Ansprüche wird hiermit durch Bezugnahme zum Inhalt der vorliegenden Beschreibung gemacht.

Eine erfindungsgemäße Metall-Luft-Zelle umfasst ein geschlossenes Zellgehäuse sowie darin angeordnet eine Luftkathode und eine metallbasierte Anode, wie dies aus dem Stand der Technik bekannt ist. Die Luftkathode und die Anode sind dabei durch einen Separator voneinander getrennt. In aller Regel stehen sowohl Kathode und Anode als auch der Separator in unmittelbarem Kontakt zu einem Elektrolyten, über den Ionen von einer Elektrode zur anderen wandern können. Meist sind sie mit diesem getränkt.

Bei dem Elektrolyten handelt es sich in aller Regel um einen wässrigen Elektrolyten, der Kalium- oder Natriumhydroxid in gelöster Form enthält. Bei dem Separator kann es sich beispielsweise um eine poröse Kunststofffolie handeln.

Das Gehäuse der erfindungsgemäßen Zelle setzt sich im Wesentlichen aus einem ersten Gehäusehalbteil sowie einem zweiten Gehäusehalbteil zusammen. Das erste Gehäusehalbteil dient bevorzugt zur Aufnahme der Luftkathode, das zweite zur Aufnahme der metallbasierten Anode. Neben diesen umfasst das Gehäuse in aller Regel lediglich noch eine Dichtung, die zwischen den Gehäusehalbteilen angeordnet ist und diese elektrisch voneinander isoliert.

Die Gehäusehalbteile sind bevorzugt becherförmig ausgebildet und weisen somit jeweils einen Boden sowie eine umlaufende Seitenwand konstanter Höhe (vom Boden aus gesehen) auf. Die Seitenwand umfasst einen endständigen Rand, der eine in der Regel kreisrunde, gegebenenfalls auch eine ovale Öffnung definiert. Im Gegenzug ist auch der Boden bevorzugt kreisrund, unter Umständen auch oval, ausgebildet. Die Seitenwand und der Boden schließen bevorzugt einen Winkel zwischen 90 ° und 120 °, besonders bevorzugt von genau 90 °, ein. Mit anderen Worten, besonders bevorzugt sitzt die Seitenwand orthogonal auf dem Boden auf. Die eingangs erwähnten Eintritts- bzw. Austrittsöffnungen für Luftsauerstoff, welche das Gehäuse einer erfindungsgemäßen Zelle wie bei jeder anderen bekannten Metall-Luft-Zelle aufweist, sind bevorzugt in den Boden des zweiten Gehäusehalbteils eingebracht.

Die Luftkathode ist bevorzugt scheibenförmig, insbesondere als kreisrunde Scheibe, ausgebildet und auf dem Boden des zweiten Gehäusehalbteils positioniert. Dabei deckt sie die Eintritts- bzw. Austrittsöffnungen ab. Ihr Rand liegt an der Innenseite der umlaufenden Seitenwand des zweiten Gehäusehalbteils an. Mit anderen Worten, die Luftkathode deckt den Boden des zweiten Gehäusehalbteils bevorzugt vollständig ab.

Es ist bevorzugt, dass die Luftkathode einer erfindungsgemäßen Zelle wie die in der DE 37 22 019 A1 beschriebenen Gasdiffusionselektroden eine metallische Ableiterstruktur aufweist. In aller Regel ist diese in eine Kunststoffmatrix eingebettet, üblicherweise gemeinsam mit einem zur Reduktion von Luftsauerstoff befähigten Katalysator.

Wie der DE 37 22 019 A1 zu entnehmen ist, können die Luftkathoden in Form von Bänder mit deutlich weniger als einem Millimeter Dicke hergestellt werden. Aus diesen Bändern können Luftkathoden für Knopfzellen passgenau ausgestanzt bzw. ausgeschnitten werden, beispielsweise in der für die vorliegend beschriebenen Knopfzellen benötigten Scheibenform.

Besonders zeichnet sich die erfindungsgemäße Metall-Luft-Zelle dadurch aus, dass auf der Innenseite der Seitenwand in der Höhe, in der der Rand der Luftkathode anliegt, eine elektrisch leitende Beschichtung angeordnet ist. Bevorzugt liegt die Beschichtung entsprechend in Form eines umlaufenden, einen Kreis bildenden Streifens vor. Selbstverständlich ist es allerdings auch möglich, die Beschichtung beispielsweise in Form eines oder mehrerer Einzelpunkte aufzutragen.

Es wurde festgestellt, dass durch diese im Grunde sehr einfache Maßnahme die erwähnte Streuung der Impedanzwerte unerwartet deutlich zurückgedrängt werden konnte. Wie oben erwähnt, sind in Luftkathoden häufig Ableiterstrukturen integriert, über die Elektronen der Luftkathode zugeführt oder aus dieser abgeleitet werden können. Offensichtlich ist bei klassischen Zellen der elektrische Kontakt zwischen diesen Ableiterstrukturen und dem korrespondierenden Gehäusepol in Einzelfällen mangelhaft und verursachte so die erwähnten hohen Impedanzwerte. Dem kann durch die erwähnte elektrisch leitende Beschichtung entgegengewirkt werden.

Die Beschichtung weist eine Matrix aus einem Bindemittel sowie, darin eingebettet, elektrisch leitende Partikel, insbesondere aus kohlenstoffbasiertem Material wie Ruß oder Graphit und/oder aus einem Metall wie Silber, Nickel oder Kupfer, auf. Der gewichtsmäßige Anteil der Partikel in der Beschichtung sollte nicht unter 75 % liegen. Bevorzugt beträgt er > 90 %.

Besonders bevorzugt wird die Beschichtung aus einer Paste, insbesondere einer druckbaren bzw. dosierbaren Paste, gebildet. Die Paste kann als Bindemittel beispielsweise Carboxymethylzellulose (CMC), Polyacrylsäure oder ein Derivat dieser Verbindungen enthalten. Darüber hinaus weist sie meist auch ein Lösungsmittel, beispielsweise Wasser oder einen Alkohol, auf. Auch in organischen Lösungsmitteln prozessierbare Bindemittel sind einsetzbar. Als elektrisch leitende Partikel enthält sie bevorzugt Graphit- oder Rußpartikel. Der Feststoffanteil der Paste, insbesondere der Anteil an enthaltenen elektrisch leitenden Partikeln, liegt bevorzugt zwischen 25 Gew.-% und 75 Gew.-%. Appliziert werden kann die Paste z.B. mittels eines Druckverfahrens oder mittels einer Dosiernadel.

In einer weiteren bevorzugten Ausführungsform wird die Beschichtung aus einem Klebstoff gebildet. Der Klebstoff enthält als Bindemittel bevorzugt einen synthetischen Kunststoff oder einen entsprechenden Vorläufer, insbesondere ein Epoxid, ein Polyimid oder ein Polyamid. Bei dem Klebstoff kann es sich um einen Schmelzkleber handeln, der entsprechend in verflüssigter Form appliziert wird, beispielsweise mittels einer Dosiernadel. Bevorzugt ist allerdings der Einsatz von Bindemitteln, die bei Raumtemperatur applizierbar sind und aushärten. Hier kommen sowohl Bindemittel in Frage, die thermisch aushärten als auch solche, die mittels ultravioletter Strahlung härtbar sind, also photochemisch vernetzbare Komponenten enthalten. Geeignete elektrisch leitende Epoxid- und Polyimid-Klebstoffe mit den geforderten Eigenschaften sind beispielsweise aus dem Bereich der Mikroelektronik bekannt.

Weiterhin kann es sich bei der Beschichtung auch um eine Paste mit Klebstoffeigenschaften handeln. Zur Herstellung einer solchen Paste können den erwähnten Pasten polymere Zusatzstoffe mit Klebeigenschaften zugesetzt werden, beispielsweise ein Anteil an einem der erwähnten synthetischen Kunststoffe.

Wie oben erwähnt, dient die Beschichtung dazu, die Impedanzwerte von Metall-Luft-Zellen zu verbessern. Zusätzlich kann sie aber auch dazu dienen, die Luftkathode in ihrer Position auf dem Boden des zweiten Gehäusehalbteils zu fixieren. Während bei klassischen Zellen die Luftkathode in der Regel ausschließlich mechanisch in ihrer Position gehalten wird, ist es im Rahmen der vorliegenden Erfindung beispielsweise möglich, zusätzlich eine stoffschlüssige Klebstoffverbindung zwischen Luftkathode und Gehäuse vorzusehen. Auch kann durch die Beschichtung eine zusätzliche Klemmpressung erzeugt werden.

In einigen bevorzugten Ausführungsformen ist der Rand der Luftkathode in die Beschichtung eingebettet, wird also beidseitig und vollständig durch die erwähnte Beschichtung abgedeckt.

In bevorzugten Ausführungsformen kann es vorgesehen sein, dass zwischen der Luftkathode und dem Boden des ersten Gehäusehalbteils ein poröser Luftverteiler angeordnet ist. Bei einem derartigen Luftverteiler kann es sich beispielsweise um eine poröse Kunststofffolie, ein Vlies oder ein poröses Filterpapier handeln.

Zwingend ist ein derartiger Luftverteiler allerdings nicht erforderlich. So offenbart beispielsweise die DE 10 2010 039 557 A1 eine Bauform einer Metall-Luft-Knopfzelle ohne einen Luftverteiler zwischen Gehäuseboden und Luftkathode.

Auch der Separator ist bevorzugt scheibenförmig ausgebildet. Er ist in der Regel auf der dem Boden des zweiten Gehäusehalbteils abgewandten Seite der Luftkathode positioniert, und zwar bevorzugt unmittelbar auf dieser. Sein Rand liegt bevorzugt - wie der Rand der scheibenförmigen Luftkathode - an der Innenseite der umlaufenden Seitenwand des zweiten Gehäusehalbteils an. Der Separator unterteilt den Innenraum des Zellgehäuses in zwei Kompartimente, von denen das eine von der Luftkathode ausgefüllt wird, wohingegen im anderen die metallbasierte Anode angeordnet ist.

Besonders bevorzugt handelt es sich bei der erfindungsgemäßen Metall-LuftZelle um eine Zink-Luft-Zelle. Zink-Luft-Zellen enthalten als metallbasierte Anoden bekanntlich Zinkpulver als Anodenmaterial.

Das erfindungsgemäße Verfahren dient der Herstellung einer Metall-LuftKnopfzelle, wie sie vorstehend beschrieben wurde. Es umfasst zumindest die folgenden Schritte:
- Bereitstellen eines ersten und eines zweiten Gehäusehalbteils, wobei die Gehäusehalbteile becherförmig ausgebildet sind und jeweils einen Boden sowie eine umlaufende Seitenwand aufweisen und wobei der Boden des zweiten Gehäusehalbteils eine oder mehrere Eintritts- bzw. Austrittsöffnungen für Luftsauerstoff aufweist,
- Positionieren oder Bilden einer metallbasierten Anode innerhalb des ersten Gehäusehalbteils,
- (a) Positionieren einer scheibenförmigen Luftkathode auf dem Boden des zweiten Gehäusehalbteils, so dass sie die Eintritts- bzw. Austrittsöffnungen abdeckt und ihr Rand an der Innenseite der umlaufenden Seitenwand des zweiten Gehäusehalbteils anliegt, sowie Abdecken der Kathode mit einem Separator oder alternativ (b) Positionieren eines scheibenförmigen Kathoden-Separator-Verbunds auf dem Boden des zweiten Gehäusehalbteils,
- Zusammenfügen des Zellgehäuses durch Einschieben des ersten Gehäusehalbteils mit der metallbasierten Anode in das zweite Gehäusehalbteil und Verschließen des Zellgehäuses, meist durch einen Bördelprozess.

Aus der WO 2012/139933 A1 ist es bekannt, dass sowohl Luftkathoden als auch Luftkathode-Separator-Verbünde durch Druck hergestellt werden können. Natürlich können grundsätzlich auch derartige Verbünde in erfindungsgemäßen Knopfzellen verbaut werden. So erklärt sich die Berücksichtigung der obigen Variante (b).

Besonders zeichnet sich das erfindungsgemäße Verfahren dadurch aus, dass auf die Innenseite der Seitenwand des zweiten Gehäusehalbteils in der Höhe, in der der Rand der scheibenförmigen Luftkathode nach ihrer Positionierung anliegt, eine elektrisch leitende Beschichtung aufgebracht wird. Die Natur der elektrisch leitenden Beschichtung wurde bereits im Rahmen der Ausführungen zur erfindungsgemäßen Metall-Luft-Zelle beschrieben, so dass sich hierzu weitere Ausführungen erübrigen.

In aller Regel wird die Beschichtung aufgebracht, bevor die Luftkathode auf dem Boden des zweiten Gehäusehalbteils positioniert wird. Details hierzu finden sich im folgenden Ausführungsbeispiel. Hervorzuheben ist, dass dieses lediglich zur Erläuterung und zum besseren Verständnis der Erfindung dient und ist in keiner Weise einschränkend zu verstehen ist.

### Beschreibung einer bevorzugten Ausführungsform

Zur Herstellung einer erfindungsgemäßen Metall-Luft-Zelle wurde ein Knopfzellendeckel mit einem kreisrunden Boden und einer umlaufenden Seitenwand als erstes Gehäusehalbteil bereitgestellt. Die Außenseite der Seitenwand wurde mit einer ringförmigen Kunststoffdichtung abgedeckt. Anschließend wurde zur Bildung einer Anode in das Gehäusehalbteil mit einem Elektrodenbinder vermischtes Zinkpulver eindosiert und mit einem wässrigen, alkalischen Elektrolyt getränkt.

Parallel dazu wurde ein Knopfzellenbecher, ebenfalls mit kreisrundem Boden und einer umlaufenden Seitenwand, als zweites Gehäusehalbteil bereitgestellt. In den Boden des Knopfzellenbechers waren mehrere Öffnungen mit einem Durchmesser von ca. 0,5 mm eingebracht (üblich sind Durchmesser zwischen 0,1 und 0,8 mm), um eine Zufuhr bzw. Abfuhr von Luftsauerstoff in und aus der Zelle zu ermöglichen. Zur Bildung der elektrisch leitenden Beschichtung wurde auf die Innenseite der Seitenwand des Gehäusebechers ausgehend vom Boden bis in eine Höhe von ca. 2 mm ein umlaufender Streifen aus einer Leitpaste mit Klebstoffeigenschaften gebildet, die einen hohen Anteil Graphitpartikel als elektrisch leitende Partikel enthielt. Nachdem man in der Paste enthaltenes Lösungsmittel hatte verdunsten lassen (Trockenschritt), wurde in den Becher ein Vlies eingelegt, das die Öffnungen im Boden des Knopfzellenbechers abdeckte und das als Luftverteiler diente. In einem weiteren Schritt wurde eine scheibenförmige Luftkathode, wie sie aus der DE 37 22 019 A1 bekannt ist, auf dem Luftverteiler im Knopfzellenbecher derart positioniert, dass ihr Rand an der mit der Leitpaste bedeckten Innenseite des zweiten Gehäusehalbteils anlag.

Zum Trockenschritt ist zu bemerken, dass dieser dem Einlegen der Luftkathode sowie gegebenenfalls dem Einlegen des Luftverteilers auch nachgeschaltet sein kann. Dies ist insbesondere bevorzugt, wenn eine stoffschlüssige Klebstoffverbindung zwischen Luftkathode und Gehäuse gebildet werden soll.

Im nächsten Schritt wurden die gemäß der vorstehenden Beschreibung vormontierten Becher- und Deckeleinheiten zusammengefügt. Hierzu wurde der Gehäusedeckel mit der darin angeordneten Anode in den Gehäusebecher mit der darin angeordneten Luftkathode eingeschoben. Anschließend wurde das Gehäuse verschlossen, indem der Öffnungsrand des Knopfzellenbechers radial nach innen umgelegt wurde (Bördelprozess).

Eine schematische Querschnittsdarstellung der so hergestellten Metall-Luft Zelle findet sich in F**ig. 1.** Die Zelle **100** umfasst ein Zellgehäuse bestehend aus dem Zellenbecher **101,** dem Zellendeckel **102** und der Dichtung **103.** Letztere ist zwischen dem Zellenbecher **101** und dem Zellendeckel **102** angeordnet und trennt diese elektrisch voneinander. Der Zellenbecher **101** und der Zellendeckel **102** sind becherförmig ausgebildet und weisen jeweils einen Boden sowie eine umlaufende Seitenwand auf. In den Boden **111** des Knopfzellenbechers **101** sind die Eintritts- bzw. Austrittsöffnungen **104 a-d** eingebracht, über die Luftsauerstoff in die Zelle **101** eindringen kann. Der Boden **111** des Knopfzellenbechers **101** ist mit dem Luftverteiler **105** abgedeckt. Dieser ist wiederum vollständig von der scheibenförmigen Luftkathode **106** bedeckt, die durch den Separator **107** vom Anodenraum getrennt ist, in dem die Zinkanode **108** angeordnet ist. Der Rand der Luftkathode **106** liegt radial an der Innenwand des Knopzellenbechers **101** an. In die Luftkathode **106** sind metallische Filamente **109** als Ableiterstruktur eingebettet. Diese treten aus dem Rand der Luftkathode **106** aus. Die elektrisch leitende Beschichtung **110,** die in Form eines umlaufenden Streifens die Innenwand **113** der Seitenwand **112** in der Höhe **114** abdeckt, in der der Rand anliegt, bildet einen leitfähigen Kontakt zwischen dem Rand der Luftkathode **106** und damit den Filamenten **109** und der Innenseite 113 des Gehäusebechers **101.** Teilweise bedeckt die Beschichtung **110** auch den Boden des Gehäusebechers **101.** Durch die Beschichtung **110** wird zum einen die Luftkathode **106** in ihrer Position fixiert und zum anderen wird der elektrische Kontakt zwischen der Luftkathode **106** und dem Knopfzellenbecher **101** verbessert.

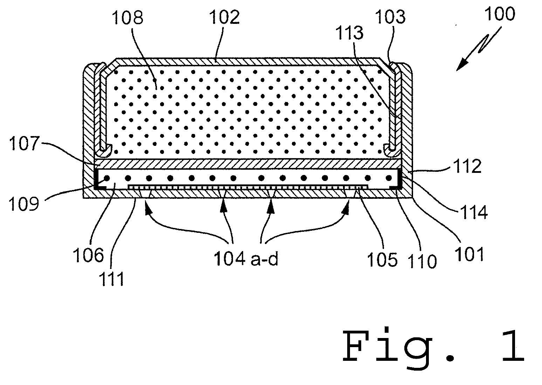

## Patentansprüche

1. Metall-Luft-Knopfzelle (100), umfassend ein geschlossenes Zellgehäuse sowie darin angeordnet eine Luftkathode (106) und eine metallbasierte Anode (108), die durch einen Separator (107) voneinander getrennt sind,
wobei
• sich das Zellgehäuse aus einem ersten Gehäusehalbteil (101) sowie einem zweiten Gehäusehalbteil (102) zusammensetzt,
• die Gehäusehalbteile (101; 102) becherförmig ausgebildet sind und jeweils einen Boden sowie eine umlaufende Seitenwand aufweisen,
• der Boden (111) des zweiten Gehäusehalbteils (102) eine oder mehrere Eintritts- bzw. Austrittsöffnungen (104 a-d) für Luftsauerstoff aufweist, und
• die Luftkathode (106) scheibenförmig ausgebildet ist und auf dem Boden (111) des zweiten Gehäusehalbteils (102) positioniert ist, so dass sie die Eintritts- bzw. Austrittsöffnungen (104 a-d) abdeckt und ihr Rand an der Innenseite (113) der umlaufenden Seitenwand (112) des zweiten Gehäusehalbteils (102) anliegt,
**dadurch gekennzeichnet, dass** auf der Innenseite (113) der Seitenwand (112) des zweiten Gehäusehalbteils (102) in der Höhe (114), in der der Rand anliegt, eine elektrisch leitende Beschichtung (110) angeordnet ist, die eine Matrix aus einem Bindemittel sowie, darin eingebettet, elektrisch leitende Partikel, aufweist.

2. Zelle nach Anspruch 1, **dadurch gekennzeichnet, dass** die elektrisch leitenden Partikel kohlenstoffbasiertes Material wie Ruß oder Graphit und/oder ein Metall wie Silber, Nickel oder Kupfer, aufweisen

3. Zelle nach einem der vorhergehenden Ansprüche, **dadurch gekennzeichnet, dass** die Beschichtung aus einem Klebstoff gebildet ist, der als Bindemittel ein Epoxid, ein Polyimid oder ein Polyamid umfasst.

4. Zelle nach einem der vorhergehenden Ansprüche, **dadurch gekennzeichnet, dass** die Beschichtung aus einer Paste, insbesondere einer druckbaren bzw dosierbaren Paste, gebildet ist, die als Bindemittel bevorzugt ein Zellulosederivat oder ein Polyacrylat aufweist.

5. Zelle nach einem der vorhergehenden Ansprüche, **dadurch gekennzeichnet, dass** die Luftkathode eine in eine Kunststoffmatrix eingebettete metallische Ableiterstruktur umfasst sowie einen zur Reduktion von Luftsauerstoff befähigten Katalysator.

6. Zelle nach einem der vorhergehenden Ansprüche, **dadurch gekennzeichnet, dass** zwischen der Luftkathode und dem Boden des ersten Gehäusehalbteils ein poröser Luftverteiler angeordnet ist.

7. Zelle nach einem der vorhergehenden Ansprüche, **dadurch gekennzeichnet, dass** der Separator scheibenförmig ausgebildet ist und auf der dem Boden des zweiten Gehäusehalbteils abgewandten Seite der Luftkathode positioniert ist, so dass sein Rand an der Innenseite der umlaufenden Seitenwand des zweiten Gehäusehalbteils anliegt.

8. Verfahren zur Herstellung einer Metall-Luft-Knopfzelle mit einer in einem geschlossenen Zellgehäuse angeordneten Luftkathode und einer metallbasierten Anode, nach einem der vorhergehenden Ansprüche, umfassend die folgenden Schritte
• Bereitstellen eines ersten und eines zweiten Gehäusehalbteils, wobei die Gehäusehalbteile becherförmig ausgebildet sind und jeweils einen Boden sowie eine umlaufende Seitenwand aufweisen, und wobei der Boden des zweiten Gehäusehalbteils eine oder mehrere Eintritts- bzw. Austrittsöffnungen für Luftsauerstoff aufweist,
• Positionieren oder Bilden einer metallbasierten Anode innerhalb des ersten Gehäusehalbteils,
• (a) Positionieren einer scheibenförmigen Luftkathode auf dem Boden des zweiten Gehäusehalbteils, so dass sie die Eintritts- bzw. Austrittsöffnungen abdeckt und ihr Rand an der Innenseite der umlaufenden Seitenwand des zweiten Gehäusehalbteils anliegt, sowie Abdecken der Kathode mit einem Separator oder alternativ (b) Positionieren eines scheibenförmigen Kathoden-Separator-Verbundes auf dem Boden des zweiten Gehäusehalbteils,
• Zusammenfügen des Zellgehäuses durch Einschieben des ersten Gehäusehalbteils mit der metallbasierten Anode in das zweite Gehäusehalbteil und Verschließen des Zellgehäuses, meist durch einen Bördelprozess,
**dadurch gekennzeichnet, dass** auf die Innenseite der Seitenwand des zweiten Gehäusehalbteils in der Höhe, in der der Rand anliegt, eine elektrisch leitende Beschichtung aufgebracht wird, die eine Matrix aus einem Bindemittel sowie, darin eingebettet, elektrisch leitende Partikel, aufweist.

9. Verfahren nach Anspruch 8, **dadurch gekennzeichnet, dass** die Beschichtung auf die Innenseite der Seitenwand aufgebracht wird, bevor die Luftkathode auf dem Boden des zweiten Gehäusehalbteils positioniert wird.

## Claims

1. Metal-air button cell (100), comprising a closed cell housing and, arranged therein, an air cathode (106) and a metal-based anode (108) which are separated from one another by a separator (107), wherein
• the cell housing is composed of a first housing half-part (101) and a second housing half-part (102),
• the housing half-parts (101; 102) are configured so as to be cup-shaped and in each case have a base and an circumferential side wall,
• the base (111) of the second housing half-part (102) has one or more entry and/or exit openings (104 a-d) for atmospheric oxygen, and
• the air cathode (106) is configured so as to be disc-shaped and is positioned on the base (111) of the second housing half-part (102) such that it covers the entry and/or exit openings (104 a-d) and its periphery bears on the inner side (113) of the circumferential side wall (112) of the second housing half-part (102),
**characterized in that**
an electrically conductive coating (110) is arranged on the inner side (113) of the side wall (112) of the second housing half-part (102) at the height (114) on which the periphery bears, wherein the electrically conductive coating has a matrix of a binding agent and, embedded therein, electrically conductive particles.

2. Cell according to Claim 1, **characterized in that** the electrically conductive particles include carbon-based material, such as carbon black or graphite, and/or a metal, such as silver, nickel or copper.

3. Cell according to any one of the preceding claims, **characterized in that** the coating is formed from an adhesive which comprises an epoxy, a polyimide or a polyamide as a binding agent.

4. Cell according to any one of the preceding claims, **characterized in that** the coating is formed from a paste, in particular a printable and/or dosable paste, which preferably has a cellulose derivative or a polyacrylate as a binding agent.

5. Cell according to any one of the preceding claims, **characterized in that** the air cathode comprises a metallic conductor structure which is embedded in a synthetic material matrix and a catalyst which is capable of reducing atmospheric oxygen.

6. Cell according to any one of the preceding claims, **characterized in that** a porous air distributor is arranged between the air cathode and the base of the first housing half-part.

7. Cell according to any one of the preceding claims, **characterized in that** the separator is configured so as to be disc-shaped and is positioned on that side of the air cathode that faces away from the base of the second housing half-part, such that its periphery bears on the inner side of the circumferential side wall of the second housing half-part.

8. Method for manufacturing a metal-air button cell having an air cathode which is arranged in a closed cell housing and a metal-based anode, according to any one of the preceding claims, comprising the following steps:
• providing a first and a second housing half-part, wherein the housing half-parts are configured so as to be cup-shaped and in each case have a base and a circumferential side wall, and wherein the base of the second housing half-part has one or more entry and/or exit openings for atmospheric oxygen,
• positioning or forming a metal-based anode within the first housing half-part,
• (a) positioning a disc-shaped air cathode on the base of the second housing half-part, such that it covers the entry and/or exit openings and its periphery bears on the inner side of the circumferential side wall of the second housing half-part, and covering the cathode with a separator or alternatively (b) positioning a disc-shaped cathode-separator composite on the base of the second housing half-part,
• assembling the cell housing by inserting the first housing half-part having the metal-based anode into the second housing half-part and sealing the cell housing, in most cases by way of a beading process,
**characterized in that**
an electrically conductive coating is applied to the inner side of the side wall of the second housing half-part at that height on which the periphery bears, wherein the electrically conductive coating has a matrix of a binding agent and, embedded therein, electrically conductive particles.

9. Method according to Claim 8, **characterized in that** the coating is applied to the inner side of the side wall before the air cathode is positioned on the base of the second housing half-part.

## Revendications

1. Pile bouton (100) métal-air, comprenant un boîtier fermé de pile ainsi que, disposées en son sein, une cathode à air (106) et une anode (108) à base de métal, qui sont séparées l'une de l'autre par un séparateur (107)
- le boîtier de pile étant composé d'une première demi-pièce (101) de boîtier ainsi que d'une deuxième demi-pièce (102) de boîtier,
- les demi-pièces (101 ; 102) de boîtier étant réalisées en forme de gobelet et présentant à chaque fois un fond ainsi qu'une paroi latérale périphérique,
- le fond (111) de la deuxième demi-pièce (102) de boîtier présentant une ou plusieurs ouvertures d'entrée ou de sortie (104 a-d) pour l'oxygène de l'air, et
- la cathode à air (106) étant réalisée en forme de disque et positionnée sur le fond (111) de la deuxième demi-pièce (102) de boîtier de manière telle qu'elle recouvre les ouvertures d'entrée ou de sortie (104 a-d) et son bord se place au niveau de la face interne (113) de la paroi latérale périphérique (112) de la deuxième demi-pièce (102) de boîtier,
**caractérisée en ce qu'**un revêtement (110) électriquement conducteur, qui présente une matrice en un liant ainsi que des particules électriquement conductrices enrobées dans celle-ci, est disposé sur la face interne (113) de la paroi latérale (112) de la deuxième demi-pièce (102) du boîtier, à la hauteur (114) à laquelle se trouve le bord.

2. Pile selon la revendication 1, **caractérisée en ce que** les particules électriquement conductrices présentent un matériau à base de carbone, tel que la suie ou le graphite et/ou un métal tel que l'argent, le nickel ou le cuivre.

3. Pile selon l'une quelconque des revendications précédentes, **caractérisée en ce que** le revêtement est réalisé à partir d'un adhésif, qui comprend, comme liant, un époxyde, un polyimide ou un polyamide.

4. Pile selon l'une quelconque des revendications précédentes, **caractérisée en ce que** le revêtement est réalisé à partir d'une pâte, en particulier à partir d'une pâte imprimable ou dosable, qui présente, comme liant, de préférence un dérivé de cellulose ou un polyacrylate.

5. Pile selon l'une quelconque des revendications précédentes, **caractérisée en ce que** la cathode à air comprend une structure dissipatrice métallique enrobée dans une matrice en matériau synthétique ainsi qu'un catalyseur apte à la réduction de l'oxygène de l'air.

6. Pile selon l'une quelconque des revendications précédentes, **caractérisée en ce qu'**un diffuseur d'air poreux est disposé entre la cathode à air et le fond de la première demi-pièce du boîtier.

7. Pile selon l'une quelconque des revendications précédentes, **caractérisée en ce que** le séparateur est réalisé en forme de disque et est positionné sur le côté de la cathode à air opposé au fond de la deuxième demi-pièce de boîtier de manière telle que son bord se place au niveau de la face interne de la paroi latérale périphérique de la deuxième demi-pièce de boîtier.

8. Procédé pour la fabrication d'une pile bouton métal-air, présentant une cathode à air et une anode à base de métal disposées dans un boîtier fermé de pile, selon l'une quelconque des revendications précédentes, comprenant les étapes suivantes, consistant à
- mettre à disposition une première et une deuxième demi-pièce de boîtier, les demi-pièces de boîtier étant réalisées en forme de gobelet et présentant à chaque fois un fond ainsi qu'une paroi latérale périphérique et le fond de la deuxième demi-pièce de boîtier présentant une ou plusieurs ouvertures d'entrée ou de sortie pour l'oxygène de l'air,
- positionner ou former l'anode à base de métal à l'intérieur de la première demi-pièce de boîtier,
- (a) positionner une cathode à air en forme de disque sur le fond de la deuxième demi-pièce de boîtier de manière telle qu'elle recouvre les ouvertures d'entrée ou de sortie et que son bord se place au niveau de la face interne de la paroi latérale périphérique de la deuxième demi-pièce de boîtier et recouvrir la cathode par un séparateur ou, en variante, (b) positionner un assemblage cathode en forme de disque-séparateur sur le fond de la deuxième demi-pièce de boîtier,
- assembler le boîtier de pile par introduction de la première demi-pièce de boîtier comprenant l'anode à base de métal dans la deuxième demi-pièce de boîtier et fermer le boîtier de la pile, généralement par un procédé de sertissage,
**caractérisé en ce qu'**un revêtement électriquement conducteur, qui présente une matrice en un liant ainsi que des particules électriquement conductrices enrobées dans celle-ci, est appliqué sur la face interne de la paroi latérale de la deuxième demi-pièce du boîtier, à la hauteur à laquelle se trouve le bord.

9. Procédé selon la revendication 8, **caractérisé en ce que** le revêtement est appliqué sur la face interne de la paroi latérale avant le positionnement de la cathode à air sur le fond de la deuxième demi-pièce de boîtier.
